# EUROPEAN PATENT SPECIFICATION

(11) **EP 1 979 569 B1**
(45) Date of publication and mention of the grant of the patent: **28.12.2011**
(21) Application number: 07704025.1
(22) Date of filing: 19.01.2007
(51) Int. Cl.: E06B 9/84, F16D 59/02, E06B 9/90

(54) **FRICTION BRAKING DEVICE**
REIBUNGSBREMSVORRICHTUNG
DISPOSITIF DE FREINAGE A FROTTEMENT

(30) Priority: 24.01.2006 IT TV20060007
(43) Date of publication of application: 15.10.2008
(73) Proprietor: NICE S.P.A., 31046 Oderzo (Treviso) (IT)
(72) Inventor: GALBERTI, Lorenzo, I-30024 Musile Di Piave (VE) (IT); MALAUSA, Andrea, I-31047 Ponte Di Piave (TV) (IT)
(74) Representative: Dragotti, Gianfranco
(86) International application number: PCT/EP2007/050555
(87) International publication number: WO 2007/085570

(56) References cited:
- EP-A- 1 324 466
- EP-A- 1 582 681
- FR-A- 2 194 265
- FR-A1- 2 720 806

## Description

The invention relates to a friction braking device, in particular for actuating systems of roller shutters, sun awnings or the like.

Friction braking devices for actuating systems of roller shutters (to which, by way of example and for the sake of simplicity, reference will be made henceforth) are known, said devices being used to brake and/or slow down rotation of a roller due to the weight of the roller shutter which is wound around it. An example of these devices is described in the Italian Utility Model 0000227599, where the end of a shaft of an electric motor is contained inside a cylindrical seat of a bush coaxial therewith and integral with a support disk for a braking material with a high coefficient of friction.

The bush has two lateral through-openings which are diametrically opposite each other and which communicate with the cylindrical seat, while the end of the shaft has a diametral through-hole such that when this end is inserted inside the cylindrical seat of the bush, the hole and the openings may be aligned and receive a pin which is forced into the hole. The pin projects from the hole and engages inside the openings, allowing not only, by means of driving, transmission of the rotary movement between the shaft and the disk, but also displacement of the disk along the axis of the shaft, caused by the axial thrust of the pin against suitably shaped walls of the openings.

The axial displacement of the disk causes the braking material to make contact or not with a second fixed disk. When the shaft is in movement, it causes rotation of the pin and the latter, acting on the shaped walls of the openings, moves the first disk away from the second disk: the shaft may thus rotate freely. When, however, the shaft is at a standstill, a spring manages to push the first disk against the second disk, blocking their relative movement and locking consequently the shaft and the roller shutter.

The pin, once it is inserted in the shaft through the openings in the bush, ensures a permanent connection between the shaft and the bush, which can be separated only by forcing the pin out of the hole and from the openings. The disadvantage arising from this is that, during assembly, a special tool is required for positioning the various components and, only with a complicated operation, is it possible both to insert the shaft into the bush, aligning the openings with the hole, and insert the pin with force and at the same time keep the compressed spring at a distance from the first disk. In the event of maintenance, in order to separate the shaft from the first disk, it is required to push the pin out of the hole, by means of a very awkward, long and difficult operation.

The object of the present invention is to provide a braking device which does not have the disadvantages associated with the prior art.

EP 1 324 466 A1 discloses a friction braking device according to the preamble of claim 1.

This object is achieved with a friction braking device comprising a drive shaft, a friction braking element and members for transmission of the motion between the shaft and the braking element, able to move the braking element axially with respect to the shaft between a first brake-engaged condition, where the braking element is locked by the contact with an engaging surface, and a second brakedisengaged position, where the braking element is separated from the engaging surface and is able to rotate driven by the shaft, characterized in that the transmission members comprise non-permanent coupling means which areoperable so as to engage and disengage the shaft and the braking element with a relative movement of these latter two parts.

The main characteristic feature of the invention of comprising non-permanent coupling means which are operable by means of a relative movement of the shaft and the braking element so as to couple together the shaft and the braking element allows the assembly/disassembly operations to be simplified enormously, in particular because thus the engaging manoeuvre requires only a manual type operation without the use of special tools.

Advantageously the non-permanent coupling means comprise a transverse pin (or equivalent projection) which is integral with the shaft (or the braking element) and which co-operates with the walls of a cavity (or equivalent opening) formed in the braking element (or in the shaft). By extending or opening the cavity, inside which the pin moves, with a path, an entry/exit way or an opening Which allows the pin to disengage from the cavity, the shaft is disengaged from the braking element with simple relative movements between the shaft and the braking element, which are performed manually without the use of tools.

During installation the pin is inserted inside the cavity so as to ensure engagement and transmission of the motion between the shaft and the braking element. If necessary, by means of a reverse operation, it is possible to extract the pin from the abovementioned cavity and permanently separate the shaft from the braking element, without particular operations and without the use of special tools. The said entry/exit path may be an opening coaxial with the shaft, with the advantage that engagement/disengagement of the shaft and braking element may occur by means of simple axial insertion of the shaft inside the cavity, further simplifying the assembly and disassembly operations. The entry/exit path may be provided simply by shaping the walls of the cavity. If the cavity is formed on the braking element, it is possible to use a conventional motor, without modifying its internal components apart from the provision of a transverse pin integral with the said shaft, or an equivalent element.

If the coupling means are incorporated in the shaft or in the braking element, i.e. integrally formed therein, a compact and low-cost system with a smaller number of parts is obtained.

The advantages of a device according to the invention will nevertheless emerge more clearly from the following description of a preferred embodiment which refers to the accompanying drawings in which:
- Fig. 1 is an exploded view of part of an actuating system for roller shutters, comprising the device according to the invention;
- Fig. 2 is a view of the components of the actuating system of Fig. 1, assembled;
- Fig. 3 is a cross-sectional view along the plane H-H of Fig. 2 when the disk of Fig. 7 is not free to rotate;
- Figs. 4 and 5 are cross-sectional views along the plane L-L of Fig. 3 for two operating conditions of the device;
- Fig. 6 is a second cross-sectional view along the plane H-H of Fig. 2 when the disk of Fig. 7 is free to rotate;
- Fig. 7 is an axonometric view of the front of a disk according to the invention;
- Fig. 8 is an axonometric view of the rear of the disk og Fig. 7;
- Fig. 9 is a front view of Fig. 7;
- Fig. 10 is a cross-sectional view along the plane B-B of Fig. 9;
- Fig. 11 is a cross-sectional view along the plane A-A of Fig. 9;
- Fig. 12 is a cross-sectional view along the plane C-C of Fig. 9;
- Fig. 13 is a view as in Fig. 9 with a further cross-sectional plane G-G shown;
- Fig. 14 is a cross-sectional view along the plane G-G in Fig. 13;
- Fig. 15 is a side view of the disk of Fig. 7;
- Figs. 16, 17 and 18 show a first variant of the device according to the invention in different engaging positions;
- Fig. 19 shows a second variant of the device according to the invention.

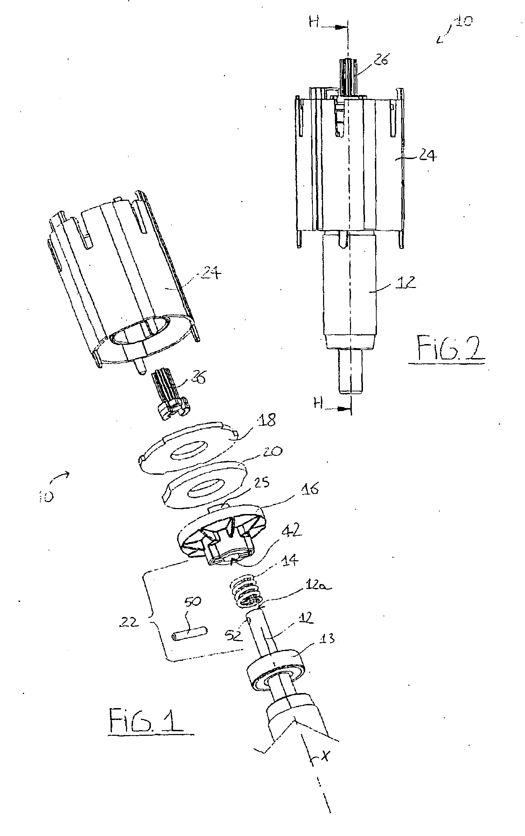

Fig. 1 shows the components of a device 10 according to the invention, which are enclosed inside a tubular body (not shown) of an actuating system for roller shutters. These components are as follows:
- a shaft 12 of an electric motor (not shown), coaxial with the tubular body and supported by suitable bearings 13, only one of which is shown;
- resilient means 14 (a spring here) which push a support piece 16, forming a seat for a disk 20 (optional) with a high coefficient of friction (for example made of brake lining material) towards the fixed surface of an engaging disk 18 (for example made of brake lining material), fixed on a cage 24 which is in turn enclosed inside the tubular body. The disk 16 is slidable axially with respect to the shaft 12 between two positions: a first brake-engaged position, where the disk 20 is in contact with the engaging disk 18, and a second brake-disengaged position, where they are separated;
- a toothed transmission spindle 26 which is rigidly joined to the disk 16 and which passes through the disk 20, the engaging disk 18 and the cage 24, so as to interconnect kinematically with a reduction gear connected to the roller shutter (both not shown).
- motion transmission members 22 situated between the shaft 12 and the support piece 16 and comprising a pin 50 which is inserted, in a non-integral manner, into a corresponding hole 52 in one end 12a of the shaft 12 and which interacts with shaped walls of a cavity 42 formed in the support piece 16, as will be better described below. The overall function of the members 22 is to separate the support piece 16, and therefore the disk 20, from the engaging disk 18 so as to ensure that, when the shaft 12 rotates they rotate integrally with the disk 16, keeping instead the two disks 20 and 18 in contact when the shaft 12 is stationary, so as to lock the disk 16. The resilient means 14 press both against the bearing 13 and on a collar 38 of the support piece 16, and are adapted to push the latter towards the engaging ring 18.

Figures 2, 3 and 6 show the components described above assembled together, highlighting their relative arrangement. It should be noted that assembly envisages:
i) insertion of the resilient means 14 on the end 12a of the shaft 12 (along the axis X of the shaft 12);
ii) insertion of the pin 50 inside the hole 52;
iii) insertion of the end 12a and the pin 50 inside the cavity 42 in an operative position for engaging the shaft 12 with the support piece 16.

In order to disengage the shaft 12 from the support piece 16 so that they assume a disengaged condition, it is sufficient to extract the end 12a from the cavity 42, by means of an operation which is the reverse of step iii).

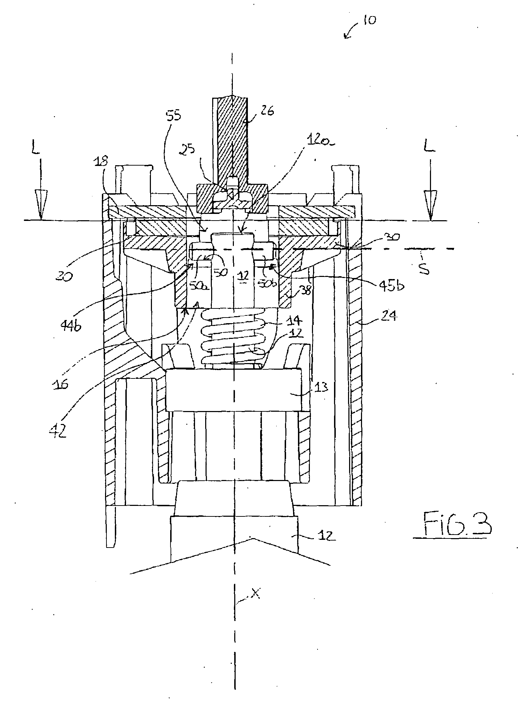

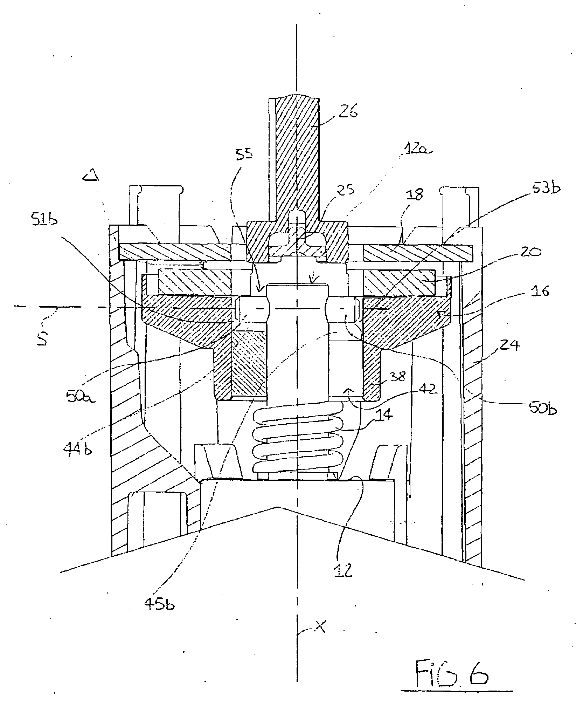

In particular, in Figs. 3 and 6, it can be noted that the ends 50a, 50b of the pin 50 are arranged in a position about midway between inclined surfaces 44a, 44b and 45a, 45b formed by shaping the inner walls of the cavity 42, as will be explained more clearly below. In Fig. 3 and Fig. 6 only the two inclined surfaces 44b and 45b are visible.

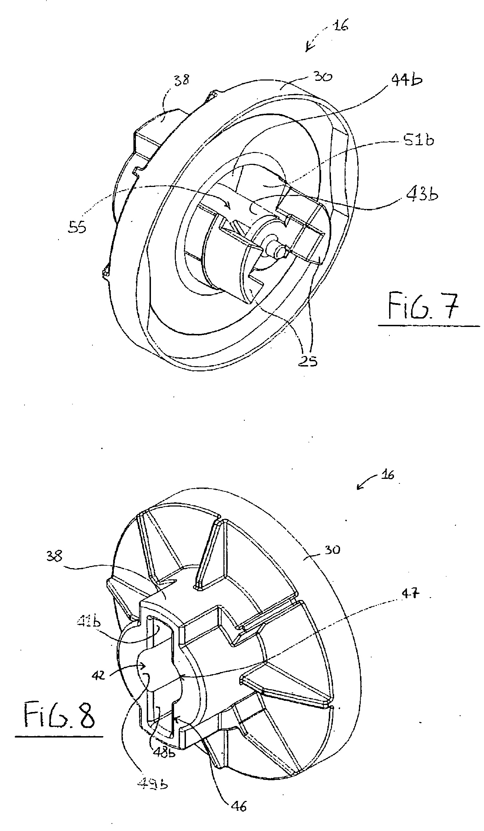

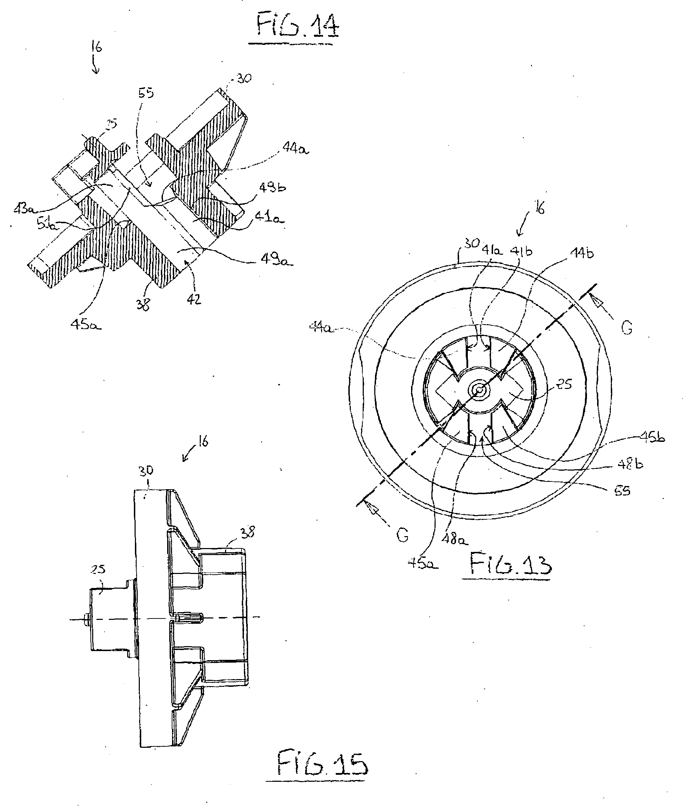

Figures 7 to 15 show in detail the outer and inner constructional form of the support piece 16. It comprises a circular retaining disk 30 inside which the disk 20 can be positioned and which tapers towards its base, extending with a cylindrical collar 38 which in turn has inside it the axial cavity 42. The cavity 42 extends inside the support piece 16, is partly closed at the top by an element 25 for engagement with/supporting the spindle 26 and has a profile which is symmetrical with respect to the cross-sectional centre plane B-B of the support piece 16, whence the use of suffixes "a" and "b" as references to indicate symmetrical parts. For the sake of simplicity reference is made on occasions to parts present only on one wall of the cavity 42. The cavity 42 has an entry opening which is composed, in plan view, of a rectangular slot 46 (Fig. 8) which has two identical elongated, flat, lateral walls 41b, 48b on the long side and which has, added in the centre thereof, a circular empty space 47 with a diameter greater than the short side of the slot 46, with two semi-circular walls 49a, 49b. The entry opening of the cavity 42 substantially corresponds to the form of the assembly consisting of the end 12a of the shaft 12 and the pin 50, namely the overall dimensions of the slot 46 and the empty space 47 are such as to receive the end 12a and the pin 50, as shown in Figure 3.

The cavity 42 comprises four identical inclined surfaces 44a, 44b and 45a, 45b which are opposite and symmetrical to each other with respect to the plane D-D and situated respectively two on either side of the cavity 42 and two facing each other.

The semi-circular walls 49b, 49a continue inside the cavity 42, maintaining their radius of curvature, and terminate respectively in semi-circular walls 43b, 43a with a smaller surface area.

The inclined surfaces 44b and 45b (and correspondingly the inclined surfaces 44a and 45a on the other side of the cavity 45) respectively connect the walls 41b and 48b with flat walls 51b and 53b which are slightly inclined with respect to the lie of the plane B-B. Consequently, the walls 51b, 53b and 43b with the symmetrical walls 51a, 53a and 43b define a terminal part 55 of the cavity 42 which is widened with respect to the entry point.

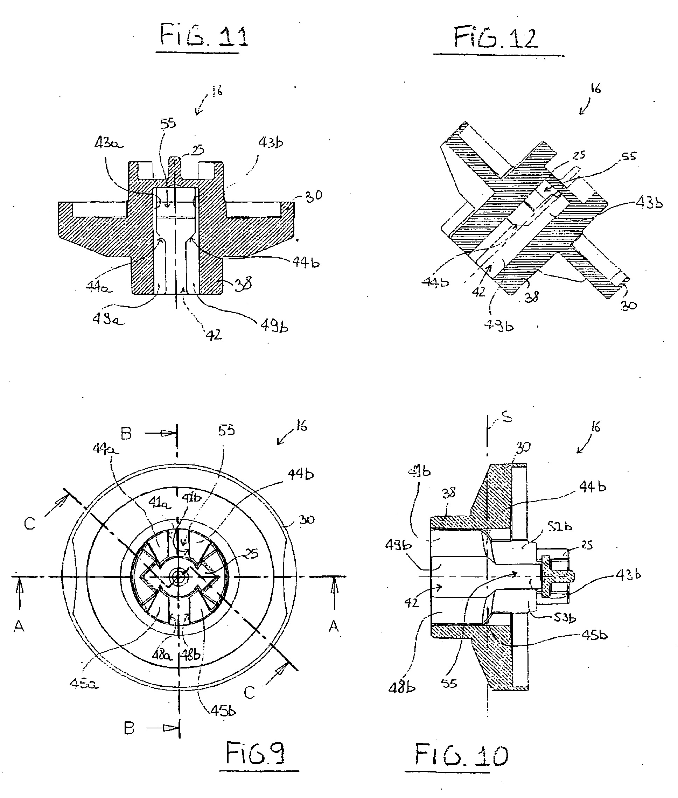

As can be seen from Figures 3, 6 and 10, when the pin 50 is inserted inside the cavity 42, its ends 50a,50b are arranged in front of the inclined surfaces 44a, 44b and 45a, 45b. In order to facilitate understanding in Figs. 3, 6 and 10 the longitudinal axis of the pin 50 has been indicated by S, it being shown alone in Fig. 10 in order to highlight there the positioning of the pin 50 inside the cavity 42. It should be noted that, since the cavity 42 encloses entirely the pin 50, the latter may be inserted inside the hole 52 without fixing it, simplifying assembly of the braking device 10.

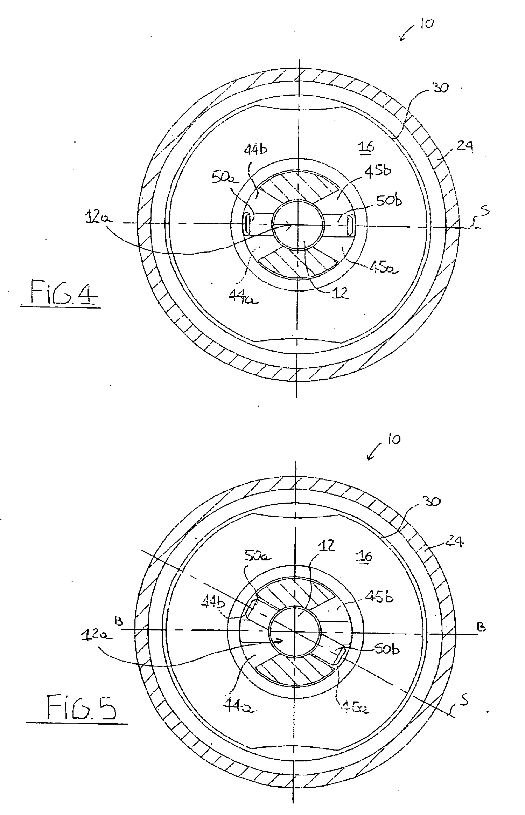

The device 10 operates in the following manner (reference should be made in particular to Figures 3, 4, 5 and 6). When the shaft 12 is stationary (Figs. 3 and 4), the resilient means 14 push the support piece 16 against the engaging ring 18, preventing relative rotation of the latter two parts owing to the friction between the disks 18, 20. Rotation of the spindle 26 connected to the support piece 16 is blocked and the roller shutter is stationary.

When the shaft 12 rotates (Figs. 5 and 6), the pin 50 also rotates. With its ends 50a, 50b it presses on the inclined surfaces 44a, 45b or 44b, 45a depending on the direction of rotation and slides on them, pushing the support piece 16 axially towards the resilient means 14, overcoming their resistance. The result is that the disk 20 is separated from the engaging disk 18 over a certain distance, indicated by in Fig. 6. This separation, and the pressing force of the ends 50a, 50b on the walls 51b and 53a (or 51a and 53b depending on the direction of rotation) allows the rotation of the support piece 16 integrally with the shaft 12, and therefore the spindle 26, and hence the roller shutter.

Clearly disengagement of the brake in the device 10 is performed in both directions of rotation of the shaft 12, owing to the symmetry of the cavity 42 and the inclined surfaces 44a, 44b, 45a, 45b.

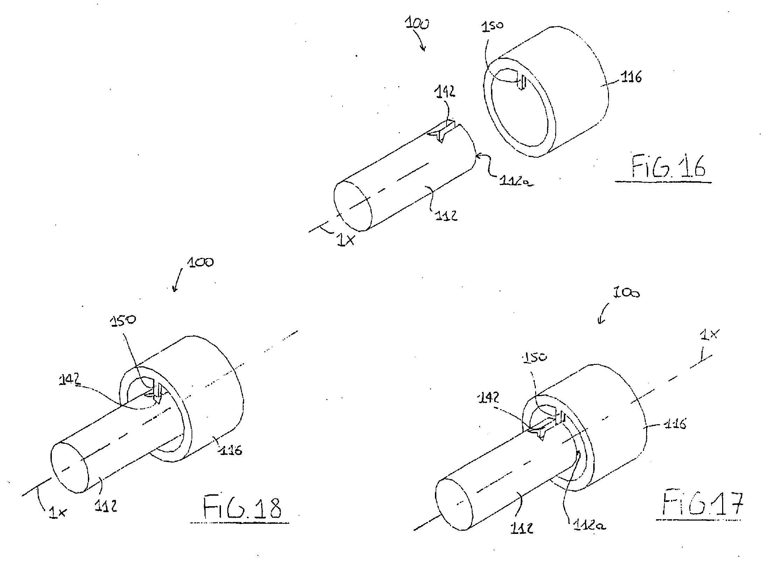

A variant 100 of the device is shown schematically in Figures 16 to 18. For this variant, and the following variant, the prefix "1" and "2" is used, respectively, for parts which are functionally equivalent to the embodiment 10 already described, to which all the parts (not shown) of the variants are to be regarded as identical. A drive shaft 112 engages with a support piece 116 which is coaxially integral with a friction disk (optional and not shown). The support piece 116 has on the edge of one end a radially projecting element 150 (for example a stud or a pin inserted in a suitable seat, or the head of a screw, etc.) which can be engaged between the walls of a groove 142 formed on the surface of the shaft 112 and having the form of a "Y". A material with a high coefficient of friction (not shown) is fixed to the other end of the support piece 116. The groove 142 extends as far as the end of the 112a of the shaft 112 directed towards the support piece 116 so as to allow, during assembly (see Fig. 17), insertion of the element 150 with a simple approach movement along the axis 1X of the shaft 112. When the latter is inserted sufficiently inside the support piece 116 and the element 150 is positioned at the vertex of the two converging sections of the groove 142 (see Fig. 18), the shaft 112 and the bush 138 are kinematically connected together.

The device 100 functions, in the following manner. When the shaft 112 is stationary, it is situated in the position shown in Fig. 18 and the support piece 116 is kept pressed against an engaging surface for the friction disk by resilient means (not shown) which tend to push it axially away from the shaft 112. When, instead, the shaft 112 rotates, the element 150 is forced by the shape of the groove 142 to move along an inclined section of the "Y", performing a movement along the axis 1X, towards the shaft 112, in opposition to the resilient means. As soon as the element 150 reaches the end of the inclined section of the "Y", the support piece 116 no longer advances but is only kept rotating by the shaft 112. The axial movement of the support piece 116, and therefore the friction disk, is sufficient to detach the latter from the fixed engaging surface on which it was kept immobile beforehand by means of friction, allowing rotation thereof.

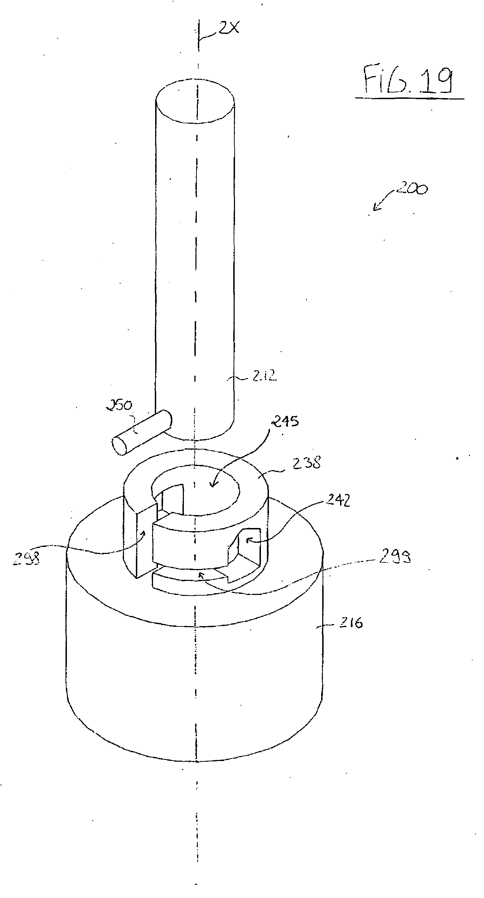

Another variant 200, shown in Fig. 19, comprises a collar 238 for engagement between a shaft 212 and a support piece 216, integral coaxially with the collar 238, for a material with a high coefficient of friction (optional). The collar 238 has a mouth 245 provided with a lateral through-opening 242 which is able to receive an element 250 projecting radially from the shaft 212 (for example a stud or a pin inserted in a suitable seat, or the head of a screw, etc.). The end of the element 250 can be inserted inside the opening 242 via an insertion path consisting of two grooves on the body of the collar 238; a first receiving groove 298, parallel to the axis 2X of the shaft 212, and a second groove 299 which is perpendicular to and communicates with the first groove and which connects the opening 242 with the mouth 245 of the collar 238. The opening 242 has obviously walls shaped so that, once the end of the element 250 has been inserted there, co-operation of the two parts functions as already described, both so as to transmit the movement between the shaft 212 and the support piece 216 and so as to obtain an axial displacement of the support piece 216 towards the shaft 212 in opposition to spring means (not shown) which tend to push the support piece 216 away from the shaft 212 against an engaging surface. With respect to that stated, it is evident that the assembly consisting of the element 250 and the opening 242 form the means used to transmit the movement from the shaft 212 to the support piece 216, and the two grooves 298, 299 are means via which the shaft 212 and the support piece 216 are able to engage with each other in a non-permanent manner by means of a relative movement of the shaft 212 and the support piece 216. The element 250 moves between the walls of the opening 242, without being able to escape therefrom, during operation of the actuating system, while during installation or maintenance it may be brought outside the opening 242 by means of a simple operation, causing it to slide along the insertion/extraction path consisting of the two grooves 298, 299 by manually moving the shaft 212. A reverse movement may bring the element 250 back inside the opening 242 and engage the element 250 with the collar 238. It is clear, moreover, that the insertion/extraction path is uninfluential during operation of the actuating system.

By way of a further variant it is possible to use a device similar to that described in the prior art, but providing the shaft with a pin which is pushed by a spring and is concealingly retractable inside it. It is sufficient to push the pin inside the shaft, eliminating temporarily the volume thereof and extract/insert axially the shaft into/from the openings in the bush. In any case, other systems for quick engagement/release of the shaft and the bush are possible.

It is clear that the invention may also be used with systems different from a friction system, for example an electromagnetic brake.

It can be understood, therefore, that the devices according to the invention solve the problems of the prior art. All that is needed in fact is a relative movement in order to be able to couple kinematically together the shaft and the friction disk and a reverse movement in order to separate them permanently, without the aid of tools or complicated operations.

## Claims

1. Friction braking device (10; 100; 200) comprising:
- a drive shaft (12; 112; 212),
- a friction braking element (16, 20; 116; 216)
- members (22; 142, 150; 242, 250) for transmission of the motion between the shaft (12; 112; 212) and the braking element (16, 20; 116; 216), able to move the braking element (16, 20; 116; 216) axially with respect to the shaft (12; 112; 212) between a first brake-engaged position, where the braking element (16, 20; 116; 216) is locked by the contact with an engaging surface (18), and a second brake-disengaged position, where the braking element (16, 20; 116; 216) is separated from the engaging surface (18) and is able to rotate driven by the shaft (12; 112; 212),
said transmission members (22; 142, 150; 242, 250) comprising non-permanent coupling means (42, 50; 142, 150; 242, 250, 298, 299) which are operable so as to engage and disengage the shaft (12; 112; 212) and the braking element (16, 20; 116; 216)
**characterized in that**
the coupling means (42, 50; 142, 150; 242, 250, 298, 299) comprise
a pin element (50; 150; 250) which is present on one of the shaft (12; 112; 212) and the braking element (16; 20; 116; 216); and
a cavity formed in the braking element (16; 20; 116; 216);
said pin element (50; 150; 250) being movable between an operative position inside the cavity (42; 142; 242) where it is able to transmit the movement to the other, and a disengaged position, outside the cavity (42; 142; 242), where the shaft (12; 112; 212) and the braking element (16, 20; 116; 216) are permanently disengaged, by means of a relative movement of the shaft (12; 112; 212) and the braking element (16, 20; 116; 216) along at least one entry and exit path from and into the cavity (42; 142; 242).

2. Device (10; 100; 200) according to Claim 1, wherein the coupling means (42, 50; 142, 150; 242, 250, 298, 299) are incorporated in the shaft (12; 112; 212) and in the braking element (16; 20; 116; 216).

3. Device (10; 100; 200) according to Claim 1, wherein the pin element (50; 150; 250) is movable to a limited degree between walls (44a, 44b, 45a, 45b) of the cavity (42; 142; 242).

4. Device (10; 100; 200) according to Claim 3, wherein the at least one entry and exit path for the pin element (50; 150; 250) is formed by shaped walls of the cavity (42; 142; 142).

5. Device (10; 100; 200) according to claim 1, wherein the coupling means (42, 50; 142, 150; 242, 250, 298, 299) are operable with at least one displacement along the axis of the shaft (12; 112; 212).

6. Device (10; 100; 200) according to claim 1, wherein the coupling means (42, 50; 142, 150; 242, 250, 298, 299) are operable with at least one rotation about the axis of the shaft (12; 112; 212).

7. Device (10; 200) according to any one of Claim 3 wherein the cavity (42; 242) is formed in the braking element (16; 246).

8. Device (10; 100; 200) according to claim 3, wherein the cavity (142) is formed in the shaft (112).

9. Device (10; 120) according to Claim 7, wherein the cavity (42; 142) has walls (41a, 41b, 48a, 48b, 49a; 298, 299) which extend as far as the end of the braking element (16; 216) engaged with the shaft (12; 212), forming an opening for insertion of the pin element (50; 250) inside the cavity (42; 242).

10. Device (10; 200) according to Claim 9, wherein the cavity (42; 242) has walls which substantially surround the pin element (50; 250).

11. Device (10; 200) according to Claim 9, wherein the cavity (42) has walls (44a, 44b, 45a, 45b; 245) which surround the end (12a) of the shaft (12) on which the pin element (50) is present.

12. Device (10; 200) according to claim 7, wherein the cavity (42; 242) has walls (44a, 44b, 45a, 45b; 242) which define inclined surfaces on which the pin element (50; 250) is able to slide following a rotation of the shaft (12; 212), thereby causing the displacement of the braking element (16, 216) between the brake-engaged position and the brake-disengaged position.

13. Device (10) according to Claim 12, wherein the inclined surfaces are arranged symmetrically with respect to a plane passing through the cavity (42).

14. Device (10) according to claim 6, wherein the cavity (42) has an entry opening which in plan view forms a rectangle (46) having in the centre a circle (47) with a diameter greater than the short side of the rectangle (46).

15. Device (100) according to Claim 6, wherein the cavity comprises a groove (142) formed in the surface of the shaft (112).

16. Device (200) according to Claim 7, wherein the at least one entry and exit path comprises one or more grooves (298, 299) on the surface of the braking element (216).

17. Device (200) according to Claim 16, wherein the braking element comprises a collar (238) for engagement with the shaft (212) having a mouth (245), the collar (238) being provided With a first receiving groove (298) substantially parallel to the axis (2X) of the shaft (212) and a second groove (299) which is substantially perpendicular to and communicates with the first groove and which connects a cavity (242) in the collar (238) to the mouth (245), so that the pin (250) is able to enter into or come out of the cavity (242) along the two grooves (289, 299) by means of a relative movement of the shaft (212) and the collar (238).

18. Device (10; 100; 200) according claim 1, wherein the braking element (16; 116; 216) is engaged with a disk (20) of material with a high coefficient of friction.

19. Device (10; 100; 200) according to Claim 1, wherein the pin element is concealingly retractable inside one of the parts.

## Patentansprüche

1. Reibungsbremsvorrichtung (10; 100; 200), aufweisend:
- eine Antriebswelle (12; 112; 212),
- ein Reibungsbremselement (16, 20; 116; 216),
- Elemente (22; 142, 150; 242, 250) zur Übertragung der Bewegung zwischen der Welle (12; 112; 212) und dem Bremselement (16, 20; 116; 216), welche das Bremselement (16, 20; 116; 216) axial in Bezug auf die Welle (12; 112; 212) zwischen einer ersten Bremskopplungsposition, in der das Bremselement (16, 20; 116; 216) durch den Kontakt mit einer Eingriffsoberfläche (18) gesperrt ist, und einer zweiten Bremsentkopplungsposition, in der das Bremselement (16, 20; 116; 216) von der Eingriffsoberfläche (18) getrennt ist und, angetrieben durch die Welle (12; 112; 212), rotieren kann,
wobei die Übertragungselemente (22; 142, 150; 242, 250) nicht-ständige Kopplungsmittel (42, 50; 142, 150; 242, 250, 298, 299) umfassen, die so betätigbar sind, dass sie in die Welle (12; 112; 212) und das Bremselement (16, 20; 116; 216) einkoppeln und aus diesen auskoppeln,
**dadurch gekennzeichnet, dass**
die Kopplungsmittel (42, 50; 142, 150; 242, 250, 298, 299) Folgendes umfassen:
ein Stiftelement (50; 150; 250), welches entweder auf der Welle (12; 112; 212) oder auf dem Bremselement (16; 20; 116; 216) vorhanden ist; und
einen Hohlraum, der im Bremselement (16; 20; 116, 216) ausgebildet ist;
wobei das Stiftelement (50; 150; 250) zwischen einer Arbeitsposition innerhalb des Hohlraums (42; 142; 242), in der es die Bewegung zum anderen übertragen kann, und einer entkoppelten Position außerhalb des Hohlraums (42; 142; 242), in der die Welle (12; 112; 212) und das Bremselement (16, 20; 116; 216) permanent entkoppelt sind, , beweglich ist, und zwar mittels einer Relativbewegung der Welle (12; 112; 212) und des Bremselements (16, 20; 116; 216) entlang mindestens einem Eintritts- und Austrittspfad aus dem Hohlraum (42; 142; 242) und in diesen.

2. Vorrichtung (10; 100; 200) nach Anspruch 1, wobei die Kopplungsmittel (42, 50; 142, 150; 242, 250, 298, 299) in der Welle (12; 112; 212) und im Bremselement (16; 20; 116; 216) integriert sind.

3. Vorrichtung (10; 100; 200) nach Anspruch 1, wobei das Stiftelement (50; 150; 250) bis zu einem begrenzten Ausmaß zwischen Wänden (44a, 44b, 45a, 45b) des Hohlraums (42; 142; 242) beweglich ist.

4. Vorrichtung (10; 100; 200) nach Anspruch 3, wobei mindestens ein Eintritts- und Austrittspfad für das Stiftelement (50; 150; 250) durch geformte Wände des Hohlraums (42; 142; 242) gebildet wird.

5. Vorrichtung (10; 100; 200) nach Anspruch 1, wobei die Kopplungsmittel (42, 50; 142, 150; 242, 250, 298, 299) mit mindestens einer Verschiebung entlang der Achse der Welle (12; 112; 212) betätigbar sind.

6. Vorrichtung (10; 100; 200) nach Anspruch 1, wobei die Kopplungsmittel (42, 50; 142, 150; 242, 250, 298, 299) mit mindestens einer Rotation um die Achse der Welle (12; 112; 212) betätigbar sind.

7. Vorrichtung (10; 200) nach Anspruch 3, wobei der Hohlraum (42; 242) im Bremselement (16; 246) ausgebildet ist.

8. Vorrichtung (10; 100; 200) nach Anspruch 3, wobei der Hohlraum (142) in der Welle (112) ausgebildet ist.

9. Vorrichtung (10; 120) nach Anspruch 7, wobei der Hohlraum (42; 142) Wände (41a, 41b, 48a, 48b, 49a; 298, 299) aufweist, die sich so weit wie das Ende des Bremselements (16; 216) erstrecken, das mit der Welle (12; 212) in Eingriff steht, wobei eine Öffnung für den Einschub des Stiftelements (50; 250) im Hohlraum (42; 242) gebildet wird.

10. Vorrichtung (10; 200) nach Anspruch 9, wobei der Hohlraum (42; 242) Wände aufweist, welche das Stiftelement (50; 250) im Wesentlichen umgeben.

11. Vorrichtung (10; 200) nach Anspruch 9, wobei der Hohlraum (42) Wände (44a, 44b, 45a, 45b; 245) aufweist, welche das Ende (12a) der Welle (12) umgeben, auf dem das Stiftelement (50) vorhanden ist.

12. Vorrichtung (10; 200) nach Anspruch 7, wobei der Hohlraum (42; 242) Wände (44a, 44b, 45a, 45b; 242) aufweist, die geneigte Oberflächen definieren, auf denen das Stiftelement (50; 250) einer Rotation der Welle (12; 212) folgend gleiten kann, wodurch die Verschiebung des Bremselements (16, 216) zwischen der Bremskopplungsposition und der Bremsentkopplungsposition bewirkt wird.

13. Vorrichtung (10) nach Anspruch 12, wobei die geneigten Oberflächen symmetrisch in Bezug auf eine Ebene angeordnet sind, welche durch den Hohlraum (42) verläuft.

14. Vorrichtung (10) nach Anspruch 6, wobei der Hohlraum (42) eine Eintrittsöffnung aufweist, welche in Draufsicht ein Rechteck (46) bildet, das im Zentrum einen Kreis (47) aufweist, dessen Durchmesser größer ist als die kurze Seite des Rechtecks (46).

15. Vorrichtung (100) nach Anspruch 6, wobei der Hohlraum eine Nut (142) umfasst, die in der Oberfläche der Welle (112) ausgebildet ist.

16. Vorrichtung (200) nach Anspruch 7, wobei der mindestens eine Eintritts- und Austrittspfad eine oder mehrere Nuten (298, 299) auf der Oberfläche des Bremselements (216) umfasst.

17. Vorrichtung (200) nach Anspruch 16, wobei das Bremselement einen Kragen (238) für die Kopplung mit der Welle (212) aufweist, die einen Mund (245) umfasst, wobei der Kragen (248) mit einer ersten Aufnahmenut (298) versehen ist, die im Wesentlichen parallel zur Achse (2X) der Welle (212) ist, und mit einer zweiten Nut (299), die im Wesentlichen senkrecht zur ersten Nut ist und mit dieser in Verbindung steht und die einen Hohlraum (242) im Kragen (238) mit dem Mund (245) verbindet, so dass der Stift (250) in den Hohlraum (242) entlang den beiden Nuten (289, 299) durch eine Relativbewegung der Welle (212) und des Kragens (238) eintreten oder aus diesem austreten kann.

18. Vorrichtung (10; 100; 200) nach Anspruch 1, wobei das Bremselement (16; 116; 216) mit einer Scheibe (20) gekoppelt ist, die aus einem Material mit einem hohen Reibungskoeffizienten ist.

19. Vorrichtung (10; 100; 200) nach Anspruch 1, wobei das Stiftelement so in eines der Teile einziehbar ist, dass es verborgen wird.

## Revendications

1. Dispositif de freinage à friction (10 ; 100 ; 200) comprenant :
un arbre d'entraînement (12 ; 112 ; 212),
un élément de freinage à friction (16, 20 ; 116 ; 216),
des éléments (22 ; 142, 150 ; 242, 250) pour la transmission du mouvement entre l'arbre (12 ; 112 ; 212) et l'élément de freinage (16, 20 ; 116 ; 216), pouvant déplacer l'élément de freinage (16, 20 ; 116 ; 216) de manière axiale par rapport à l'arbre (12 ; 112 ; 212) entre une première position mise en prise du frein, dans laquelle l'élément de freinage (16, 20 ; 116 ; 216) est bloqué par le contact avec une surface de mise en prise (18) et une deuxième position dégagée du frein, dans laquelle l'élément de freinage (16, 20 ; 116 ; 216) est séparé de la surface de mise en prise (18) et peut tourner en étant entraîné par l'arbre (12 ; 112 ; 212),
lesdits éléments de transmission (22 ; 142, 150 ; 242, 250) comprenant des moyens de couplage non permanents (42, 50 ; 142, 150 ; 242, 250, 298, 299) qui peuvent être actionnés afin de mettre en prise et de dégager l'arbre (12 ; 112 ; 212) et l'élément de freinage (16, 20 ; 116 ; 216),
**caractérisé en ce que** :
les moyens de couplage (42, 50 ; 142, 150 ; 242, 250, 298, 299) comprennent :
un élément formant broche (50 ; 150 ; 250) qui est présent sur l'un parmi l'arbre (12 ; 112 ; 212) et l'élément de freinage (16 ; 20 ; 116 ; 216) ; et
une cavité formée dans l'élément de freinage (16 ; 20 ; 116 ; 216) ;
ledit élément formant broche (50 ; 150 ; 250) étant mobile entre une position opérationnelle à l'intérieur de la cavité (42 ; 142 ; 242) dans laquelle il peut transmettre le mouvement à l'autre, et une position dégagée, à l'extérieur de la cavité (42 ; 142 ; 242) dans laquelle l'arbre (12 ; 112 ; 212) et l'élément de freinage (16, 20 ; 116 ; 216) sont dégagés de manière permanente, au moyen d'un mouvement relatif de l'arbre (12 ; 112 ; 212) et de l'élément de freinage (16, 20 ; 116 ; 216) le long d'au moins une trajectoire d'entrée et de sortie de et dans la cavité (42 ; 142 ; 242).

2. Dispositif (10; 100 ; 200) selon la revendication 1, dans lequel les moyens de couplage (42, 50 ; 142, 150 ; 242, 250, 298, 299) sont incorporés dans l'arbre (12; 112 ; 212) et dans l'élément de freinage (16 ; 20 ; 116 ; 216).

3. Dispositif (10; 100 ; 200) selon la revendication 1, dans lequel l'élément formant broche (50 ; 150 ; 250) est mobile jusqu'à un degré limité entre les parois (44a, 44b, 45a, 45b) de la cavité (42 ; 142 ; 242).

4. Dispositif (10; 100 ; 200) selon la revendication 3, dans lequel la au moins une trajectoire d'entrée et de sortie pour l'élément formant broche (50 ; 150 ; 250) est formée par des parois formées de la cavité (42 ; 142 ; 242).

5. Dispositif (10; 100 ; 200) selon la revendication 1, dans lequel les moyens de couplage (42, 50 ; 142, 150 ; 242, 250, 298, 299) peuvent être actionnés avec au moins un déplacement le long de l'axe de l'arbre (12 ; 112 ; 212).

6. Dispositif (10; 100 ; 200) selon la revendication 1, dans lequel les moyens de couplage (42, 50 ; 142, 150 ; 242, 250, 298, 299) peuvent être actionnés avec au moins une rotation autour de l'axe de l'arbre (12 ; 112 ; 212).

7. Dispositif (10 ; 200) selon la revendication 3, dans lequel la cavité (42 ; 242) est formée dans l'élément de freinage (16 ; 246).

8. Dispositif (10; 100 ; 200) selon la revendication 3, dans lequel la cavité (142) est formée dans l'arbre (112).

9. Dispositif (10 ; 120) selon la revendication 7, dans lequel la cavité (42 ; 142) a des parois (41a, 41b, 48a, 48b, 49a ; 298, 299) qui s'étendent aussi loin que l'extrémité de l'élément de freinage (16 ; 216) mis en prise avec l'arbre (12 ; 212), formant une ouverture pour l'insertion de l'élément formant broche (50 ; 250) à l'intérieur de la cavité (42 ; 242).

10. Dispositif (10 ; 200) selon la revendication 9, dans lequel la cavité (42 ; 242) a des parois qui entourent sensiblement l'élément formant broche (50 ; 250).

11. Dispositif (10 ; 200) selon la revendication 9, dans lequel la cavité (42) a des parois (44a, 44b, 45a, 45b ; 245) qui entourent l'extrémité (12a) de l'arbre (12) sur lequel l'élément formant broche (50) est présent.

12. Dispositif (10 ; 200) selon la revendication 7, dans lequel la cavité (42 ; 242) a des parois (44a, 44b, 45a, 45b ; 242) qui définissent des surfaces inclinées sur lesquelles l'élément formant broche (50 ; 250) peut coulisser suite à une rotation de l'arbre (12; 212), provoquant ainsi le déplacement de l'élément de freinage (16, 216) entre la position mise en prise du frein et la position dégagée du frein.

13. Dispositif (10) selon la revendication 12, dans lequel les surfaces inclinées sont agencées symétriquement par rapport à un plan passant par la cavité (42).

14. Dispositif (10) selon la revendication 6, dans lequel la cavité (42) a une ouverture d'entrée qui, sur une vue en plan, forme un rectangle (46) ayant dans le centre, un cercle (47) avec un diamètre plus important que le côté court du rectangle (46).

15. Dispositif (100) selon la revendication 6, dans lequel la cavité comprend une rainure (142) formée dans la surface de l'arbre (112).

16. Dispositif (200) selon la revendication 7, dans lequel la au moins une trajectoire d'entrée et de sortie comprend une ou plusieurs rainures (298, 299) sur la surface de l'élément de freinage (216).

17. Dispositif (200) selon la revendication 16, dans lequel l'élément de freinage comprend un collier (238) pour la mise en prise avec l'arbre (212) ayant une embouchure (245), le collier (238) étant prévu avec une première rainure de réception (298) sensiblement parallèle à l'axe (2X) de l'arbre (212) et une deuxième rainure (299) qui est sensiblement perpendiculaire à et communique avec la première rainure et qui raccorde une cavité (242) dans le collier (238) à l'embouchure (245), de sorte que la broche (250) peut entrer et sortir de la cavité (242) le long des deux rainures (289, 299) au moyen d'un mouvement relatif de l'arbre (212) et du collier (238).

18. Dispositif (10 ; 100 ; 200) selon la revendication 1, dans lequel l'élément de freinage (16 ; 116 ; 216) est mis en prise avec un disque (20) réalisé avec un matériau ayant un coefficient de friction élevé.

19. Dispositif (10 ; 100 ; 200) selon la revendication 1, dans lequel l'élément formant broche peut se retirer de manière dissimulée à l'intérieur de l'une des parties.
